# EUROPEAN PATENT APPLICATION

(11) **EP 3 955 144 A1**
(43) Date of publication of application: **16.02.2022**
(21) Application number: 20315382.0
(22) Date of filing: 11.08.2020
(51) Int. Cl.: G06F 21/32, G06F 21/45, G06F 21/34

(54) **BIOMETRIC PAYMENT CARD ENROLLMENT NOTIFICATION**

(71) Applicant: Thales DIS France SA, 92190 Meudon (FR)
(72) Inventor: Oung, Richard, 13881 Gemenos Cedex (FR); Favreau, Valentin, 13881 Gemenos Cedex (FR); Chafer, Sylvain, 13881 Gemenos Cedex (FR)
(74) Representative: Grevin, Emmanuel

(57) **Abstract**

Enrolling a cardholder of a biometric payment card having a biometric sensor to authenticate to a service provider by using the biometric sensor located on the biometric payment card by receiving, by a processor of the biometric payment card, biometric information from the biometric sensor; adding the received biometric information to a biometric template for the cardholder of the biometric payment card; determining whether the biometric information completes a biometric template; verifying the cardholder of the payment card as being a legitimate user of the payment card; upon positive verification of the cardholder and positive determination that the biometric template is complete, transmitting, by the processor of the biometric payment card, a notification of completed biometric-use authentication enrollment from the biometric payment card to the service provider; and upon receipt of the notification of completed biometric-use authentication enrollment, transmitting, by the service provider, a notification to the of completed enrollment through an out-of-band notification system.

## Description

### BACKGROUND OF THE INVENTION

The present invention relates, generally, to biometric payment cards, and, more particularly, to notification of enrollment of the use of a biometric for user authentication in conjunction with card use.

Smartcards have been used as payment cards for some years. It is now commonly known that when using a payment card with electronic connectors for payment, the card is inserted into a slot of a point-of-sale (POS) terminal. Conversely, contactless cards, which contain antenna and wireless communication electronics, are positioned near a payment terminal when using such a card for payment, e.g., for a near field communication (NFC) terminal, the card is simply tapped against the terminal.

In many markets, the use of a payment card is accompanied by a second user-verification factor, usually in the form of the user entering a personal identification number on the POS terminal. The card may verify that the user is the authorized user of the card by verifying that the user entered the correct pin.

Biometric cards are becoming more prevalent. A biometric card is a smart card that has the ability to capture biometric information of a user of the card. The biometric maybe a fingerprint, iris scan, retina scan, voice print, facial pattern, tattoos, etc. In particular, fingerprint scanning is suitable for use in authenticating a user of a smart card. International Patent Application WO 2018/151647; METHOD AND SMART CARD FOR PROGRESSIVE FINGERPRINT ENROLLMENT; inventors Almers, Peter and Nielsen, Anders; assigned to Fingerprint Cards AB, Göteborg, Sweden (hereinafter "[Almers]") describes a fingerprint card and the progressive enrollment of fingerprints for use in authenticating users, for example, to payment services using a smart card.

While biometric cards, e.g., fingerprint cards, show a great deal of promise in easing the use of smart cards as payment devices, users are frequently not aware that they may use a biometric for authenticating to a payment service. Initially, while a card is delivered with a biometric sensor, until the biometric that is to be used to authenticate a user has been successfully entered into a template and the user independently authenticated such that the biometric template can be confidently linked to an authorized user, the sensor cannot be used for user authentication. [Almers] describes one method for adding the biometric information of a user to a biometric template. After the template has been completed and the user verified, theoretically the user can then proceed to use the biometric card to authenticate to a service.

However, often users are not effectively made aware that the biometric is ready for user authentication. The cards may have on-board devices for primitive communication back to the user, e.g., an LED that may light up to indicate that the user should take an action, such as placing a finger over a sensor. These LEDs may further communicate to the user whether the enrollment process is in progress or needs further action. Nevertheless, even with clear instructions provided to the user, many users will expect that non-enrolled cards are ready for biometric authentication and, conversely, the user is often not aware the card is ready for biometric user authentication and thus does not take advantage of that capability. Consequently, users often return to the card issuer for further instruction on how to enroll the card for biometric authentication.

From the foregoing it is apparent that there is a need for an improved method to alert a user that the user's biometric payment card has been enrolled for biometric user authentication.

### SUMMARY

Enrolling a cardholder of a biometric payment card having a biometric sensor to authenticate to a service provider by using the biometric sensor located on the biometric payment card by receiving, by a processor of the biometric payment card, biometric information from the biometric sensor; adding, by the processor of the biometric payment card, the received biometric information to a biometric template for the cardholder of the biometric payment card; determining, by the processor of the biometric payment card, whether the biometric information completes a biometric template; verifying the cardholder of the payment card as being a legitimate user of the payment card; upon positive verification of the cardholder and positive determination that the biometric template is complete, transmitting, by the processor of the biometric payment card, a notification of completed biometric-use authentication enrollment from the biometric payment card to the service provider; and upon receipt of the notification of completed biometric-use authentication enrollment, transmitting, by the service provider, a notification to the cardholder of completed enrollment through an out-of-band notification system.

In an aspect the notification to the cardholder of completed enrollment is an out-of-band notification. In a further aspect, the out-of-band notification is selected from the group short message service (SMS) message, e-mail, telephone call.

The biometric information may be a portion of a fingerprint. Alternatively, the biometric information may be related to iris scan, retina scan, voice recognition, facial recognition, or tattoo recognition.

In an aspect, the biometric information is captured during processing of a get processing option command received by the biometric payment card from a card reader.

In an aspect, the verification of the cardholder is performed by the biometric card by verifying a user passcode.

In a further aspect, the steps of receiving biometric information, adding biometric information to the biometric template of the cardholder of the biometric payment card, and wherein determining whether the biometric information completes the biometric template of the cardholder of the biometric payment card are performed by the processor of the biometric payment card over the course of at least two payment transactions wherein the received biometric information of each of said at least two payment transactions is added to the biometric template for the cardholder of the biometric payment card.

Enrollment of the biometric payment card for biometric user authentication may further include determining, by the biometric payment card, whether the biometric payment card has been enrolled for user authentication using the biometric sensor;
if the card has not been enrolled for user authentication using the biometric sensor, informing a payment terminal communicating with the biometric payment card that other user verification is required.

### BRIEF DESCRIPTION OF THE DRAWINGS

FIG. 1 is a schematic illustration of a network in which a cardholder uses a biometric payment card at a point-of-sale (POS) terminal to perform a payment transaction with a service provider.
FIG. 2 is a perspective view of a POS terminal and a biometric card used to perform a transaction via the POS terminal.
FIG. 3 is a high-level block diagram of a device architecture for biometric card.
FIG. 4 is a block diagram illustrating programs included in a memory of the biometric card of FIG. 3
Fig. 5 is a high-level data-flow and timing sequence diagram providing an out-of-band notification to the cardholder of the successful verified enrollment of biometric capture for user-authentication.
FIG. 6 illustrates an out-of-band message notifying a cardholder of enrollment of the cardholder's biometric card for biometric user authentication.
FIG. 7 is a timing sequence diagram illustrating one embodiment of the dataflow of Figure 5.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. Similarly, in the following description references are made to various methods executed by a processor of a server. As a person skilled in the art knows, such descriptions should be taken to mean that a processor, in fact, executes the methods, software instructions, and software modules and that those software modules when executed by the processor performs the actions described herein.

As is common in the field, there may be phrases herein that refer to a service provider. When a statement is made to the effect that a *service provider takes an action* that should be interpreted as that a computer of the service provider, typically referred to as a *server computer* or simply *server,* actually carries out the action. Even more specifically, the *server computer* acts according to some software instructions that when executed by the server computer perform the described actions.

The herein described technology provides a mechanism by which a cardholder of a biometric payment card is efficiently notified that the biometric payment card has been enrolled for user authentication using biometric information.

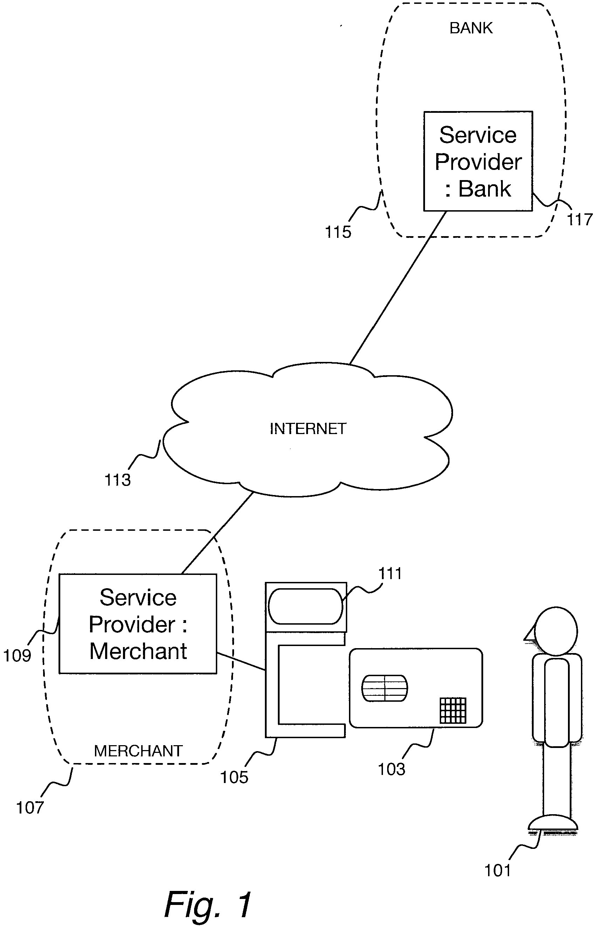

Figure 1 is a schematic illustration of a network in which a cardholder 101 uses a biometric payment card 103 at a point-of-sale (POS) terminal 105 to perform a payment transaction with a service provider 107, which may be a merchant, for example.

The service provider 107 operates a server 109 to which the POS terminal 105 is connected. The POS terminal 105 may have a display 111 through which the SP server 109 may communicate with the cardholder 101, for example, to inform the cardholder 101 of transaction details and to request input, such as PIN entry, from the cardholder 101.

The service provider 107, more precisely, the service provider server 109, may be connected over a network 113 to other service providers 115 that provide services to the merchant, e.g., the card-issuing bank, more precisely, to the server 117. This second, remote service provider 115, may, for example, provide user verification, account verification, and payment processing services.

While the herein-described technology is applicable to many different use cases, for the purposes of providing an example, the second service provider 115 is considered a card-issuing service provider and the server it operates is referred to herein as the *card-issuer server* 117. However, it is not necessarily operated by the card issuer.

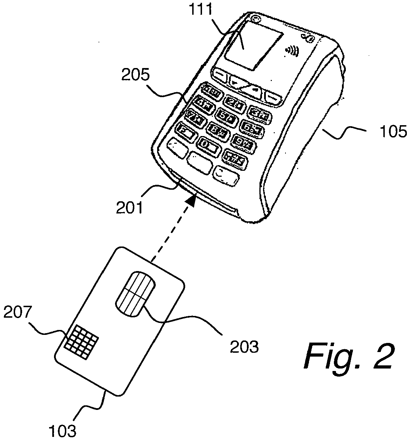

Figure 2 is a perspective view of a POS terminal 105 and a biometric card 103 used to perform a transaction via the POS terminal 105. The POS terminal has a slot 201 into which the biometric card 103 may be inserted. Upon insertion into the slot 201, the contact pad 205 located on the biometric card 103 makes contact to corresponding contacts located inside the POS terminal 105. Through these contacts, the biometric card 103 communicates with the POS terminal 105. The communication may be according to ISO standard 7816.

In alternative embodiments, communication between the biometric card 103 and the terminal may be wireless, e.g., using Near Field Communication (NFC).

In addition to the display 111, the POS terminal 105 may have a keypad 205 for receiving user input, e.g., PIN entry.

The biometric card 103 also contains a biometric sensor 207. While the technology described herein is not limited to any particular type of biometric, in a preferred embodiment, the biometric sensor 207 is a fingerprint sensor. Other types of biometrics for which the technology described herein may be used include, but is not limited to, voice recognition, iris scanning, retina scanning, facial recognition, and tattoo recognition.

A biometric card with fingerprint sensor technology is described in [Almers], incorporated herein by reference.

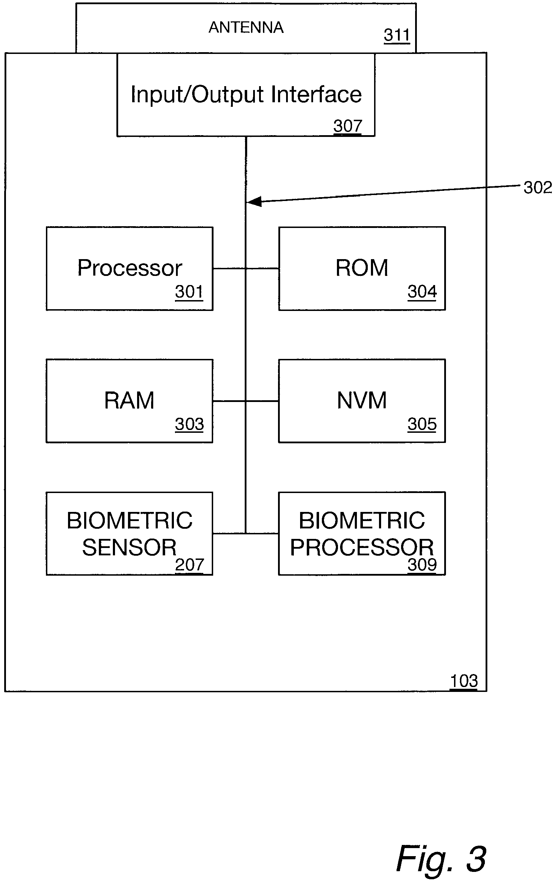

Figure 3 is a high-level block diagram of a device architecture for biometric card 103. The biometric card 103 may include a processor 301 connected via a bus 302 to a random-access memory (RAM) 303, a read-only memory (ROM) 304, and a non-volatile memory (NVM) 305. The biometric card 103 further includes an input/output interface 307 for connecting the processor 301, again typically via the bus 302, fo the contact pad 203 by which the biometric card 103 may be connected to the POS terminal 105. Alternatively (or additionally) the biometric card 103 contains an antenna 311 by which the biometric device 103 may connect wirelessly to the POS terminal 105 via the input/output interface 307.

The biometric card 103 further contains the biometric sensor 207. In an embodiment, the biometric sensor 207 is connected to a dedicated biometric processor 309. In Figure 3, the connection between the biometric sensor 207 and the biometric processor 309 is via the bus 302. However, in other embodiments (not shown), the biometric sensor 207 is connected to the biometric processor on a dedicated connection and the biometric processor 309 is connected to the rest of the modules either via the bus 302 or through separate connection to the processor 301.

In other embodiments, the biometric processor 309 is not used and the biometric sensor 207 communicates directly to the processor 301, for example, by being connected to the bus 302.

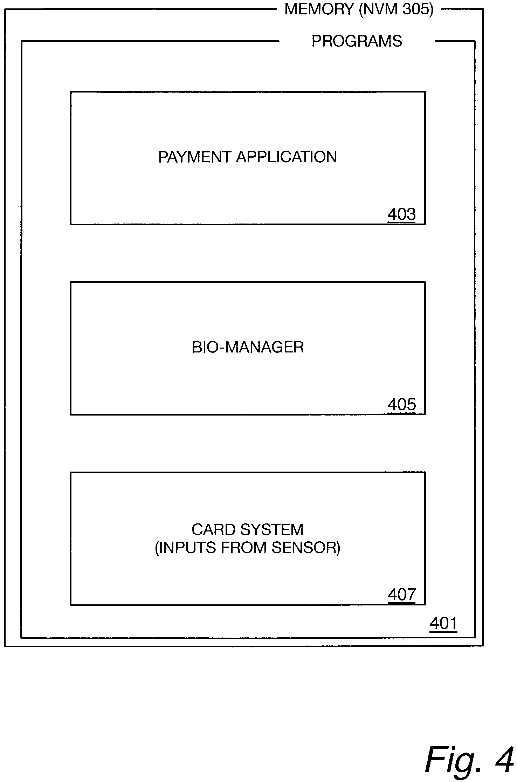

The ROM 304 and/or NVM 305 may include computer programs 401 as is illustrated in Figure 4. While it is here depicted that the computer programs 401 are all co-located in the ROM 304 or the NVM 305, in actual practice there is no such restriction as programs may be spread out over multiple memories and even temporarily installed in

RAM 303. Furthermore, the biometric card 103 may include multiple ROMs or NVMs.

The programs 401 include a card system program 407. The card system program 407 receives inputs from the biometric sensor 207.

The programs 401 also includes a payment application 403 through which a cardholder 101 executes payments. The payment application 403 interacts with the merchant service provider server 109 and may also interact with the card issuer service provider server 117.

Additionally, the programs 401 contains a biomanager 405 program. The bio-manager 405, working closely with the payment application 403, provides functionality to enroll biometric information for authentication. The biomanager 405 provides functionality such as scoring biometric information captured on the biometric sensor 307 both for validating a biometric data as belonging to an authorized cardholder of the biometric card and to match up biometric data with previously stored biometric data for the purpose completing biometric templates.

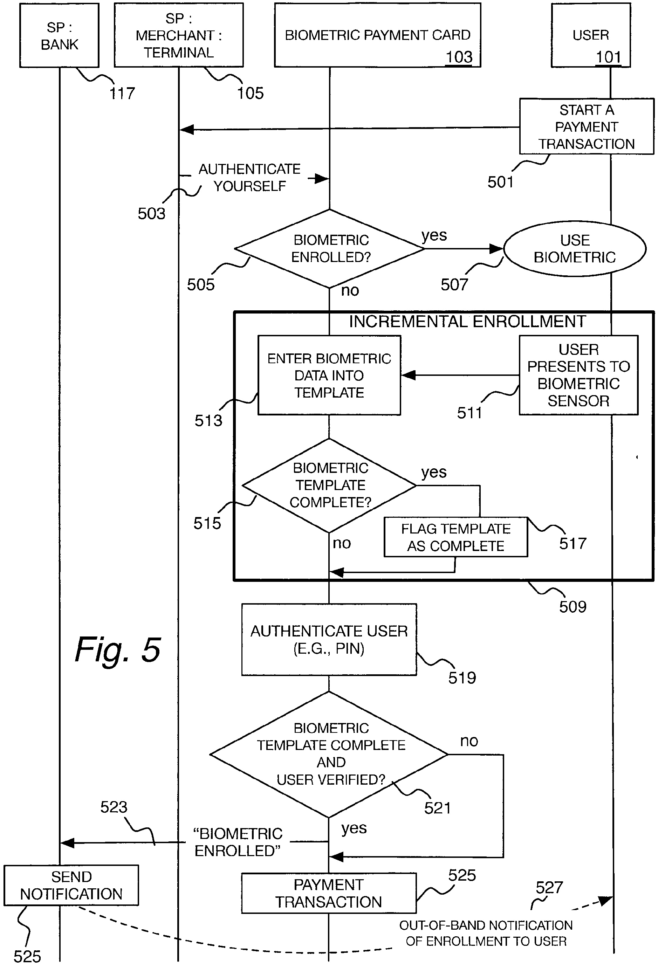

Figure 5 is a high-level data-flow and timing sequence diagram providing an out-of-band notification to the cardholder 101 of the successful verified enrollment of biometric capture for user-authentication.

The flow starts with the cardholder 101 starting a payment transaction using the biometric card 103, step 501. The payment transaction may be started, for example, by the cardholder 101 inserting the biometric card 103 into the slot 201 of the biometric terminal 105. Alternatively, the cardholder 101 may start the transaction by "tapping" the card on the terminal in the manner of NFC transactions.

To use the biometric card 103 in a payment transaction, user authentication is required. Thus, the POS terminal 105 may display a message requesting the cardholder 101 to authenticate and may transmit a message 503 to the biometric payment card 103 that a user authentication is required.

As the card 103 is a *biometric* card, the cardholder may wish to use the biometric sensor 207 for authentication. However, as noted herein above, often it is unclear to the cardholder whether the biometric card 103 has been enrolled for biometric user authentication. When a card is issued from an issuer 115, typically no biometric information of the cardholder is available. Thus, the card would not be ready for biometric authentication.

Using progressive biometric enrollment, for example, as described in [Almers], the cardholder's biometric information is progressively added to one or more biometric templates stored in the biometric card 103. When a sufficiently complete template has been produced, the biometric manager 405 may change the state of the biometric template from *incomplete* to *complete.* However, that is not sufficient for enrolling the card for biometric authentication of the cardholder 101. The cardholder 101 must also be verified so as to link the completed biometric template to the verified cardholder. At that point the biometric enrollment can be considered complete and the cardholder may use the biometric, e.g., fingerprint, for user authentication.

Accordingly, the biometric card 103 determines whether the card has been enrolled for biometric user-authentication, step 505. If yes, the biometric may be used, step 507. The steps used in biometric user-authentication are not illustrated and discussed in detail here. They may, for example, include displaying instructions on the display 111 directing the cardholder to place the cardholder's finger on the biometric sensor 207, the collection of biometric data, comparison against stored templates, etc.

On the other hand, if the biometric card 103 has not been enrolled for biometric user-authentication, an incremental enrollment 509 may be included in a payment transaction or in the course of several payment transactions. Thus, the cardholder may nevertheless present the cardholder's fingerprint to the biometric sensor 207, step 511, and that data may be entered into a template database on the biometric card 103, step 513.

The enrollment of a biometric card 103 for biometric user authentication has several states. A first state is that there is not a complete biometric template recorded against which subsequent attempts at user verification using the biometric can be compared; i.e., *biometric-template incomplete.* A second state is that at least one biometric template has been completed, but without a verification of the cardholder matching that biometric as a valid cardholder for the biometric card 103; i.e., *biometric-template complete*/*user not verified.* Finally, a third state is that a template has been completed *and* the cardholder has been verified; i.e., *biometric-template complete*/*user verified.*

Accordingly, as biometric data is entered into a biometric template during incremental enrollment, the biometric template is evaluated as to whether it is a completed template, step 515, and if so, the template may be marked as completed, step 517.

The flow-chart of Figure 5 is abbreviated in the sense that it presumes that the cardholder uses the biometric feature when the card has been fully enrolled. Thus, if the biometric functionality has been used in step 507, the flow does not pass through below decision box 505.

On the other hand, if biometric authentication has not taken place, the cardholder must still be authenticated. Typically, the user verification of the cardholder is performed through a password or PIN entry, step 519. However, if the policy of the biometric card 103, the issuer bank 115, or the merchant 107 permits or requires, other forms of user verification may be performed in lieu of password or PIN entry.

If the biometric template has been completed and the cardholder has been authenticated, step 521, then the bank server 117 is informed by transmitting a message to that effect, message 523, from the biometric payment card 103 to the issuer server 117 via the merchant POS terminal 105 and merchant server 109 (not shown in Figure 5). The biometric-enrolled message contains a card identifier and user identifier.

In an alternative embodiment, the enrollment of the biometric payment card 103 for biometric user authentication does not require user verification. Thus, once the biometric template is completed, step 517, the "Biometric Enrolled" message 523 may be sent to the bank server 117 bypassing the authentication step 519. In such embodiment, step 521 only tests for completion of the biometric template.

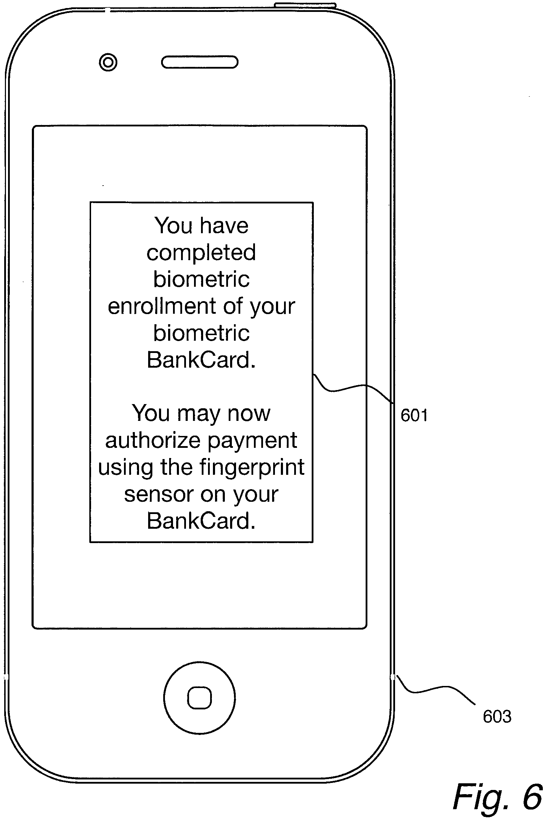

The bank server 117, upon receipt of the biometric-enrolled message 523, transmits, step 525, an out-of-band notification, message 527, to the cardholder 101 to inform the cardholder 101 that the biometric card 103 has been enrolled for biometric user-authentication. This out-of-band notification may be in the form of an email, an SMS text message (as illustrated in Figure 6, where a text message 601 is displayed on the user's mobile telephone 603), telephone call, etc.

Typically the steps of Figure 5 are performed in conjunction with a payment transaction. Thus, the actual steps of the payment transaction are performed, step 529.

It should be noted that the sequence of steps is not necessarily as depicted in Figure 5.

The incremental enrollment process of method 509 may be completed over the course of several transactions whereby a bit of the biometric is captured in different transactions until the biometric template is complete and flagged as such in step 517.

In the incremental enrollment process of method 509, in one embodiment, the entry of data to complete a biometric template is completed over the course of one or more payment transactions. In an alternative embodiment, the biometric enrollment is performed by the cardholder 101 using their own equipment, e.g., at the home or office of the cardholder 101. The cardholder 101 connects the biometric card 103 to a reader and the biomanager 405 captures biometric data. When the biometric data completes a template, the template is flagged as complete. Subsequently, user verification of the cardholder may be performed as part of a payment transaction (as illustrated in Fig. 5) and when the card is used in a payment transaction, the biometric card 103 transmits the "biometric enrolled" message to the to the bank server 117.

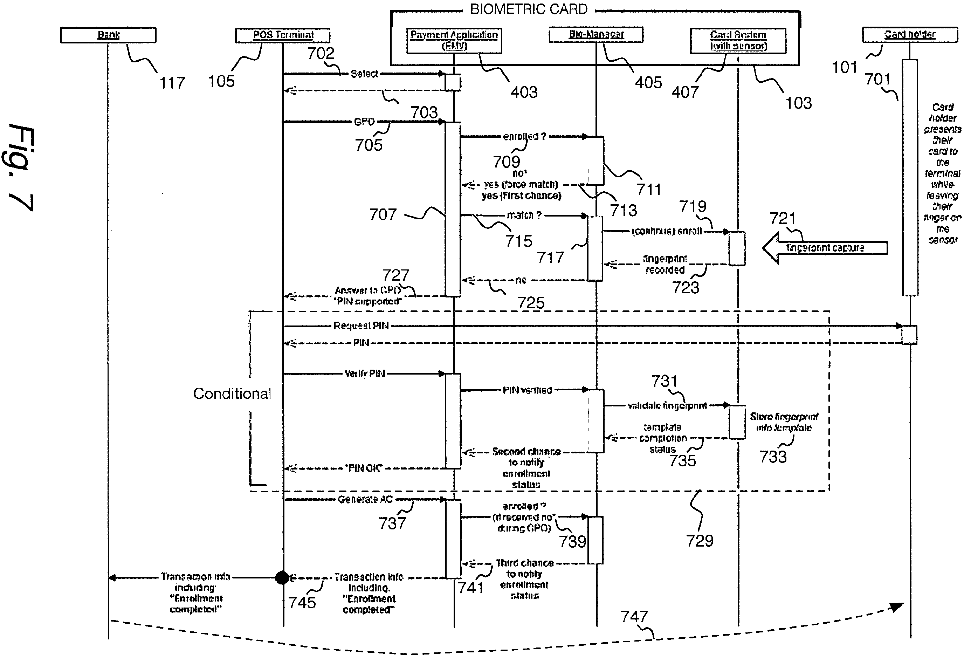

Figure 7 is a timing sequence diagram illustrating one embodiment of the dataflow of Figure 5.

The cardholder 101 commences a payment transaction with the POS terminal 105 by presenting the biometric card to the terminal 105, step 701, and presents whatever it is that will be sensed by the biometric sensor 207, e.g., a fingerprint or voiceprint. The POS requests a selection of a payment application, step 702. A payment application is selected by the cardholder 101 and the selection communicated to the POS terminal, step 703.

In a typical EMV payment transaction, once the card in inserted in a reader of the POS terminal 105, there is a selection process to choose one payment application within several payment and other possible applications. This process may include listing existing applications on the display 111 and receive payment application selection by user selection via the keypad 205.

The POS terminal 105 then sends a 'Get Processing Option' (GPO) command, step 705, followed by several 'Read Records' commands (not shown). These commands are exchanged to inquire about card capabilities and determine which operations can and will be performed during the transaction. These include card authentication and cardholder authentication (PIN, fingerprint, signature, etc.).

The POS terminal 105 then proceeds to these operations. In the illustrated case, PIN verification takes place until fingerprint verification can be used.

The payment application 403 engages with the POS terminal to answer the Get Processing Option command, steps 707. It may request information from the Bio-Manager such as determination of whether the card has been enrolled for biometric user authentication, step 709. As Figure 7 represents the dataflow used for each transaction during the entire life of the biometric card 103, biometrics are taken in each payment transaction. Thus, the payment application 403 requests the enrollment status from the bio-manager 405.

The bio-manager determines whether the card is enrolled, step 711, and replies with the enrollment status, step 713. The enrollment status may include the options *yes* (indicating completed enrollment), *force match* (indicating that the user should be requested to enter biometric information, e.g., place finger on fingerprint sensor, so that a biometric template may be completed), and *yes* (indicating that the biometric card has been enrolled for biometric user authentication).

The *force match* option is available so that biometric capture can be performed even if the card has not yet been enrolled. Alternatively, the *no* answer may cause biometric capture to be skipped.

Next, the payment application 403 inquires from the bio-manager 405 as to whether there is a matching biometric information captured, step 715.

The bio-manager 405 obtains biometric data from cardholder 101 captured by the card system 407 from the biometric sensor 207, steps 717- 723. The bio-manager 405 starts collection of biometric information and continues until the biometric is no longer available, step 717. The bio-manager 405 reads biometric data provided by the card system 407, step 719. The cardholder 101 makes a biometric, e.g., fingerprint, available to the biometric sensor, step 721. The card system 407 records data obtained from the biometric sensor 207 and makes the data available to the bio-manager 405, step 723.

If the biometric is not available or the biometric card 103 has not been enrolled for biometric user authentication, the bio-manager answers the payment application 403 with a "no", step 725, which will require some other form of user authentication. The answer to the Get Processing Option message 705 includes a list of possible verification methods. Accordingly, until the biometric template has been completed by the cardholder, the payment application 403 answers to the POS terminal with a message that does not include biometric user-authentication, thus, requiring another form of user authentication, step 727. For example, the bio-manager 405 may answer "PIN supported", which would indicate to the POS Terminal 105 that a PIN verification will be required.

If the biometric card 103 has not been enrolled for biometric user authentication, an alternative user authentication 729 is performed. In the example of Figure 7, that alternative user authentication is PIN verification. It is not necessary here to go into the details of PIN verification. However, if the PIN is verified, the bio-manager 405 notes that status change and continues to complete the biometric template, step 731. The card system stores the biometric data into the biometric template, step 733.

The template completion status is recorded, step 735.

If the user is authenticated through the alternative user authentication mechanism, e.g., PIN verification, the payment application 403 notifies the POS terminal payment system of that fact, step 737.

Once all authentication and information inquiries have been completed, the POS terminal 105 proceeds to the purpose of the transaction, i.e., the payment. To do so, the POS terminal 105 sends a 'Generate Application Cryptogram' command containing all transaction information (amount, currency, type, etc.), step 737. Card will then process all those, assess risks and return a cryptogram (computed from all information and internal data) among 3 kinds: transaction approval, transaction denial, transaction pending approval. This typically triggers an online exchange with the bank after which a second 'Generate Application cryptogram' may be sent to the card expecting final decision (not shown) if the first 'Generate Application Cryptogam' was for a pending approval.

The payment application 403 again queries the bio-manager 405 of enrollment status, step 739. The bio-manager 405 responds with the enrollment status, step 741.

If the enrollment status has been verified earlier in the flow, the steps 739 through 741 are not required.

At this point the transaction is complete. The biometric card 103 can be taken off the reader. The POS terminal; 105 transmits all necessary transaction information along with the cryptogram (proof of the transaction result) to the issuing bank 117, step 745.

When the payment application has been informed that the biometric has been completed and the alternative user authentication, e.g., PIN, has been satisfactorily performed, the payment application notifies the issuing bank 117 via the POS terminal 105 that the biometric card 103 has been enrolled for biometric user authentication together with the transaction information, step 745.

As noted in Figure 5, the issuing bank 117, upon receiving notification of the enrollment of the biometric card 103 for biometric user authentication, notifies the cardholder 101 through an out-of-band channel, step 747.

Implicit in Figures 5 and 7 is that each of the programs involved, e.g., the payment application 403, the bio-manager 405, and card system 407, contain program instructions that cause the processor to create the messages that are transmitted and instructions that cause the processor to receive the messages that are transmitted to it.

From the foregoing, it will be apparent that an efficient and secure mechanism for informing a cardholder that the cardholder's biometric card has been successfully enrolled for biometric user authentication is provided.

Although specific embodiments of the invention have been described and illustrated, the invention is not to be limited to the specific forms or arrangements of parts so described and illustrated. The invention is limited only by the claims.

## Claims

1. A method for enrolling a cardholder (101) of a biometric payment card (103) by using a biometric sensor (207) located on the biometric payment card, the method comprising:
receiving, by a processor of the biometric payment card, biometric information from the biometric sensor;
adding, by the processor of the biometric payment card, the received biometric information to a biometric template for the cardholder of the biometric payment card;
determining, by the processor of the biometric payment card, whether the biometric information completes a biometric template;
verifying the cardholder of the payment card as being a legitimate user of the payment card;
upon positive verification of the cardholder and positive determination that the biometric template is complete, transmitting, by the processor of the biometric payment card, a notification of completed biometric-use authentication enrollment from the biometric payment card to the service provider (107); and
upon receipt of the notification of completed biometric-use authentication enrollment, transmitting, by the service provider, a notification to the cardholder of completed enrollment through an out-of-band notification system.

2. The method of Claim 1, wherein the notification to the cardholder of completed enrollment is an out-of-band notification.

3. The method of Claim 2, wherein the out-of-band notification is selected from the group short message service (SMS) message, e-mail, telephone call.

4. The method of Claim 1, wherein the biometric information are portions of a fingerprint.

5. The method of Claim 1, wherein the biometric information are obtained from iris scan, retina scan, voice print, tattoo recognition, or facial recognition.

6. The method of Claim 1, wherein the biometric information is captured during processing of a get processing option command received by the biometric payment card from a card reader.

7. The method of Claim 1, wherein the verification of the cardholder is performed by the biometric card by verifying a user passcode.

8. The method of Claim 1, wherein the steps of receiving biometric information, adding biometric information to the biometric template of the cardholder of the biometric payment card, and wherein determining whether the biometric information completes the biometric template of the cardholder of the biometric payment card are performed by the processor of the biometric payment card over the course of at least two payment transactions wherein the received biometric information of each of said at least two payment transactions is added to the biometric template for the cardholder of the biometric payment card.

9. The method of Claim 7, further comprising the step of:
determining, by the biometric payment card, whether the biometric payment card has been enrolled for user authentication using the biometric sensor;
if the card has not been enrolled for user authentication using the biometric sensor, informing a payment terminal communicating with the biometric payment card that additional user verification is required.

10. A biometric payment card (103) comprising:
a processor;
a biometric sensor connected to the processor; and
a memory connected to the processor and containing instructions executable by the processor including an operating system and
instructions to enroll the payment card for user authentication using the biometric sensor for transactions with a service provider, the instruction including instructions to cause the processor to:
receive biometric data from the biometric sensor;
determining whether fingerprint data completes a biometric template for a legitimate cardholder of the payment card;
verify a cardholder of the payment card as being a legitimate cardholder of the payment card;
upon positive verification of the cardholder and positive determination that the biometric template is complete, transmitting a notification of completed biometric-use-enrollment to the service provider thereby allowing the service provider to notify the cardholder of completed enrollment through an out-of-band notification system.

11. The biometric payment card of Claim 10, wherein the notification to the cardholder of completed enrollment is an out-of-band notification.

12. The biometric payment card of Claim 11, wherein the out-of-band notification is selected from the group short message service (SMS) message, e-mail, telephone call.

13. The biometric payment card of Claim 10, wherein the biometric information are portions of a fingerprint.

14. The biometric payment card of Claim 10, wherein the biometric information are obtained from iris scan, retina scan, voice print, tattoo recognition, or facial recognition.

15. The biometric payment card of Claim 10, further comprising instructions to cause the processor to capture the biometric information during processing of a get processing option command received by the biometric payment card from a card reader.

16. The biometric payment card of Claim 10, further comprising instructions to cause the processor to perform the verification of the cardholder of the biometric card by verifying a user passcode.

17. The biometric payment card of Claim 10, where the instructions to cause the processor to perform receiving biometric information, adding biometric information to the biometric template of the cardholder of the biometric payment card, and determining whether the biometric information completes the biometric template of the cardholder of the biometric payment card are performed by the processor of the biometric payment card over the course of at least two payment transactions wherein the received biometric information of each of said at least two payment transactions is added to the biometric template for the cardholder of the biometric payment card.

18. The biometric payment card of Claim 10, further comprising instructions to cause the processor to:
determine whether the biometric payment card has been enrolled for user authentication using the biometric sensor;
if the card has not been enrolled for user authentication using the biometric sensor, inform a payment terminal communicating with the biometric payment card that additional user verification is required.
